# EUROPÄISCHE PATENTANMELDUNG

(11) **EP 1 266 689 A1**
(43) Veröffentlichungstag der Anmeldung: **18.12.2002**
(21) Anmeldenummer: 01114480.5
(22) Anmeldetag: 15.06.2001
(51) Int. Cl.: B01J 38/48, B01J 23/92, B01D 53/86

(54) **Verfahren zur Regeneration eines für die Stickoxidminderung ausgebildeten Katalysators**

(71) Anmelder: SIEMENS AKTIENGESELLSCHAFT, 80333 München (DE)
(72) Erfinder: Fischer, Stefan, Dr., 71154 Nufringen (DE); Pajonk, Guenther, Dr., 96199 Zapfendorf (DE); Rigby, Karina, Dr., 96050 Bamberg (DE)

(57) **Zusammenfassung**

Zur Regeneration eines Stickoxidminderungs-Katalysators, insbesondere eines SCR-Katalysators, ist vorgesehen, diesen mit einer fluorid- und/oder sulfathaltigen Lösung zu behandeln. Dadurch wird das Katalysatormaterial (2) in effektiver Weise von Katalysatorgiften (6), insbesondere von Silizium- bzw. Arsenverbindungen, gereinigt.

## Beschreibung

Die Erfindung betrifft ein Verfahren zur Regeneration eines Katalysators, der für eine Stickoxidminderung eines Abgases ausgebildet ist.

Ein derartiger Katalysator wird auch als DeNOx-Katalysator bezeichnet. Heutzutage werden im Wesentlichen sogenannte SCR-Katalysatoren eingesetzt, die nach dem Prinzip der selektiven katalytischen Reduktion arbeiten.

SCR-Katalysatoren finden in Einrichtungen zur Rauchgasreinigung in großindustriellen Anlagen, beispielsweise Kraftwerken oder Verbrennungsanlagen, Anwendung. Daneben werden derartige Katalysatoren auch im Automobilbereich, dort insbesondere im Bereich der Nutzfahrzeuge, verwendet, um den Stickoxidanteil der in die Umwelt abgegebenen Abgase möglichst gering zu halten.

Bei dem Verfahren der selektiven katalytischen Reduktion wird das Stickoxid in Gegenwart von Katalysatormaterial insbesondere mit Ammoniak selektiv zu Stickstoff reduziert. SCR-Katalysatoren bestehen beispielsweise zu etwa 90 % aus Titanoxid, zu etwa 10 % aus Wolframoxid und zu etwa 0-5 % aus Vanadiumoxid, wie der EP 0 159 959 B1 zu entnehmen ist. Derartige Katalysatoren sind beispielsweise als vollkeramische Wabenkatalysatoren ausgebildet, wie beispielsweise der DE 198 05 295 zu entnehmen ist, oder als beschichtete Plattenkatalysatoren, wie beispielsweise der DE 28 46 476 A1 zu entnehmen ist. Für eine gute Katalysatorwirkung ist von entscheidender Bedeutung, dass das zu reinigende Abgas mit einer möglichst großen aktiven Oberfläche des Katalysators in Kontakt kommt. Dabei bilden insbesondere vanadiumhaltige Mikrostrukturen sogenannte aktive Zentren, die für die Katalysatorwirkung von entscheidender Bedeutung sind.

Es hat sich gezeigt, dass mit zunehmender Betriebsdauer die Wirksamkeit des Katalysators nachlässt. Der Grund hierfür liegt in Katalysatorgiften, die eine Deaktivierung des Katalysators bewirken. Die Deaktivierung ist u.a. darauf zurückzuführen, dass sich die im Abgas enthaltenen Bestandteile auf der Katalysatoroberfläche bzw. in Poren des Katalysators ablagern oder mit den Katalysatorbestandteilen reagieren. Dadurch werden beispielsweise der Zugang zu den aktiven Zentren blockiert oder die Wirkung der aktiven Zentren verringert.

Insbesondere aus wirtschaftlichen Gründen wird die Regeneration eines deaktivierten Katalysators anstelle eines Katalysatoraustausches angestrebt. Hierzu sind bereits eine Vielzahl von unterschiedlichen Verfahren bekannt, wie sie beispielsweise aus der DE 38 24 464 A1 zu entnehmen sind. Derartige Verfahren zur Regeneration von deaktivierten Katalysatoren basieren auf einer mechanischen abrasiven Behandlung oder auf einer Behandlung mit Wasser oder wässrigen Lösungen von Säuren oder Laugen. Die mechanische Behandlung ist sehr kostenintensiv und es besteht die Gefahr, dass zudem auch Katalysatormaterial mit abgetragen wird. Bei einer Behandlung mit Wasser können lediglich wasserlösliche Verunreinigungen entfernt werden. Säuren und Laugen haben den Nachteil, dass sie auch das Katalysatormaterial angreifen und somit schädigen.

Die Regeneration des Katalysators erfolgt oftmals in zwei Schritten, nämlich in einem ersten Reinigungsschritt und in einem zweiten Reaktivierungsschritt. So ist beispielsweise aus der EP 0 159 959 B1 zu entnehmen, den Katalysator mit Wasser zu reinigen und anschließend mit einer schwefelhaltigen Lösung zu behandeln. Nach der EP 0 159 959 B1 soll sich die anschließende Behandlung mit einer schwefelhaltigen Lösung positiv auf die Reaktivierung des Katalysators auswirken, da festgestellt wurde, dass ein schwefelhaltiger Katalysator nach dem Waschvorgang einen geringeren Schwefelanteil aufweist als ein neuer Katalysator.

Der Erfindung liegt die Aufgabe zugrunde, eine möglichst schonende und effiziente Regenerierung eines Katalysators, insbesondere eines SCR-Katalysators zu ermöglichen.

Die Aufgabe wird gemäß der Erfindung gelöst durch ein Verfahren zur Regeneration eines für die Stickoxidminderung ausgebildeten Katalysators, bei dem der Katalysator mit einer neutralen oder sauren Fluorid- und/oder mit einer neutralen Sulfatlösung behandelt wird.

Die Fluoride und Sulfate, also die Salze der Flusssäure bzw. der Schwefelsäure, greifen im Unterschied zu Säuren allgemein und insbesondere auch im Unterschied zu den genannten Säuren, aus denen sie abgeleitet werden, die Katalysatorgifte bevorzugt an. Die Wirkung dieser Salze als Reinigungsmittel gründet auf ihrer Eigenschaft als besonders wirkungsvolle Komplexbildner. Aufgrund der Anwesenheit derartiger Salze in einer Reinigungslösung werden die Katalysatorgifte, wie schwermetall- oder siliziumhaltige Ablagerungen, komplex gebunden und mit der Reinigungslösung aus dem Katalysator entfernt. Zur Reinigung wird dabei der Katalysator beispielsweise mit der Lösung besprüht, von der Lösung durchströmt oder in die Lösung eingetaucht.

Unter Sulfate werden hier ausschließlich die sogenannten - "neutralen" Sulfate der allgemeinen Formel M¹₂SO₄ verstanden. M¹ bedeutet hierbei ein einwertiges Element, beispielsweise die Metalle der ersten Hauptgruppe, oder auch eine einwertige Verbindung, wie beispielsweise Ammonium. Unter Fluoride werden sowohl die einfachen "neutralen" Fluoride als auch die sogenannten "sauren" Fluoride (Hydrogenfluoride) verstanden (zur Definition vgl. Römpp - Chemie Lexikon, Band 9).

Als besonders geeignet haben sich in Versuchen eine Ammoniumfluoridlösung bzw. eine Ammouniumsulfatlösung herausgestellt, die in bevorzugten Ausgestaltungen des Verfahrens wahlweise verwendet werden.

Weiterhin haben sich als geeignete Salze die Alkalisalze, insbesondere die Salze des Natriums für die Fluorid- bzw. Sulfatlösung herausgestellt.

Im Hinblick auf eine geeignete Regenerationswirkung bei wirtschaftlichem Einsatz hat sich eine wässrige Lösung mit einem Fluorid- bzw. Sulfatanteil mit bis zu 50 Gew.-% als vorteilhaft herausgestellt.

Insbesondere weist die wässrige Lösung einen Fluorid- bzw. Sulfatanteil im Bereich zwischen 1 und 15 Gew.-%, vorzugsweise von etwa 10 Gew.-% auf.

Um nach der Entfernung der Katalysatorgifte durch die Behandlung mit der Fluorid- oder Sulfatlösung wieder eine möglichst hohe Katalysatoraktivität zu erzielen, wird der Katalysator anschließend mit einer vanadiumhaltigen Lösung behandelt. Dabei wird dem Katalysator, der üblicherweise Vanadiumoxid enthält, Vanadium zugeführt. Dadurch wird insbesondere die Anzahl der sogenannten aktiven Vanadium-Zentren erhöht.

Vorzugsweise wird bei dem Verfahren zur Reinigung und Reaktivierung des Katalysators in vier Schritten vorgegangen, wobei der Katalysator in einem ersten Schritt zunächst mit der Fluorid- und/oder der Sulfatlösung behandelt, in einem zweiten Schritt mit Wasser gespült, in einem dritten Schritt mit einer vanadiumhaltigen Lösung behandelt und anschließend in einem vierten Schritt getrocknet wird. Die Behandlung mit den einzelnen Lösungen kann dabei durch Besprühen, Durchströmen oder Eintauchen des Katalysators erfolgen.

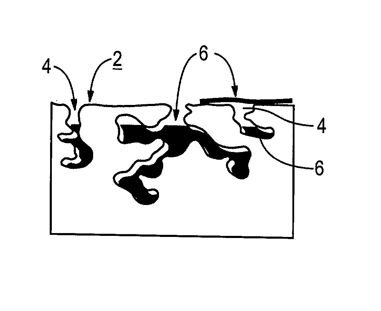

Ein Ausführungsbeispiel für die Durchführung des Verfahrens wird im Folgenden anhand der einzigen Figur näher erläutert. Diese zeigt eine schematische Darstellung eines vergifteten Katalysatormaterials mit Poren.

Ein Katalysatormaterial 2 gemäß der Figur weist eine Vielzahl von Poren 4 auf, so dass die katalytisch aktive Oberfläche groß ist. Das Katalysatormaterial 2 setzt sich im Wesentlichen zusammen aus Titanoxid, aus Wolframoxid und/oder aus Molybdänoxid und zu einem geringen Anteil aus Vanadiumoxid. Ein derartiges Katalysatormaterial 2 wird als Katalysator für eine Rauchgasreinigungsanlage einer industriellen Anlage oder auch im Automobilbereich eingesetzt. Mit dem Katalysatormaterial 2 werden unter Zugabe eines Reduktionsmittels, insbesondere von Ammoniak oder von Harnstoff, die in einem Ab- oder Rauchgas enthaltenden Stickoxide durch eine selektive katalytische Reduktion reduziert, so dass die Abgabe der schädlichen Stickoxide an die Umwelt möglichst gering gehalten ist.

Im Abgas, insbesondere im Rauchgas einer Verbrennungsanlage, sind sogenannte Katalysatorgifte, wie schwermetallhaltige und speziell arsenhaltige Verbindungen sowie Siliziumverbindungen, enthalten. Diese führen im Laufe des Betriebs zu einer Deaktivierung des Katalysatormaterials 2 und beeinträchtigen dessen Wirkungsweise.

Diese Deaktivierung ist in der Figur schematisch durch ein Katalysatorgift 6 dargestellt, welches sich auf der Oberfläche des Katalysatormaterials 2 ablagert und zum Teil die Poren 4 zusetzt oder mit einer Deckschicht überzieht und verschließt. Dadurch wird die aktive Oberfläche des Katalysatormaterials 2 erheblich verkleinert, so dass dessen katalytische Wirkung stark reduziert ist. Über das Katalysatormaterial 2 verteilt befinden sich sogenannte aktive Zentren, in denen Vanadiumoxid vorhanden ist. Diese Zentren tragen maßgebend zur Wirkung des Katalysators bei.

Zur Regeneration des Katalysatormaterials 2 wird dieses zunächst vom Katalysatorgift 6 befreit und anschließend wieder reaktiviert. Die Befreiung des Katalysatormaterials 2 vom Katalysatorgift 6 geschieht in einem Reinigungsschritt, welcher insbesondere die Behandlung des Katalysatormaterials 2 mit einer Fluorid- oder Sulfatlösung beinhaltet. Die sich daran anschließende Reaktivierung beinhaltet im Wesentlichen das Behandeln des gereinigten Katalysatormaterials 2 mit einer vanadiumhaltigen Lösung.

Vorzugsweise wird das Katalysatormaterial 2 zunächst in eine wässrige Lösung, insbesondere eine Ammoniumfluoridlösung, eingetaucht. Mit dieser Ammoniumfluoridlösung werden insbesondere vom Katalysator sehr effizient Siliziumverbindungen entfernt, die dessen Aktivität beeinträchtigen. Das Katalysatormaterial 2 bleibt über eine Reinigungszeit von etwa 5 bis 30 Minuten in Kontakt mit der wässrigen Lösung.

Hierbei entfaltet die Ammoniumfluoridlösung ihre Wirkung und löst durch Komplexbildung die Katalysatorgifte vom Katalysatormaterial 2. Besonders effizient werden die Silizium- und Arsenverbindungen komplex gebunden und entfernt.

In einem anschließenden Spülschritt wird das Katalysatormaterial 2 mit Wasser durchspült, so dass die verbleibende Ammoniumfluoridlösung mit den darin enthaltenen Katalysatorgiften ausgespült wird.

Das derartig gereinigte Katalysatormaterial 2 wird zum Zweck der Reaktivierung anschließend in ein Bad einer vanadiumhaltigen Lösung eingetaucht. Die Konzentration des Vanadiums richtet sich hierbei nach der Art des Katalysatormaterials 2, insbesondere nach dem Vanadiumanteil im Katalysatormaterial 2. Weiterhin hängt die Konzentration und darüber hinaus auch die Zeitdauer der Behandlung mit der vanadiumhaltigen Lösung von der Stärke der vorhergehenden Deaktivierung ab. Durch das Behandeln mit der vanadiumhaltigen Lösung nimmt das Katalysatormaterial 2 Vanadium auf und erhält damit wieder seine nahezu ursprüngliche Wirksamkeit zurück.

Anschließend wird in einem vierten Schritt das Katalysatormaterial 2 getrocknet und steht dann wieder für den Einsatz beispielsweise in einer Einrichtung zur Rauchgasreinigung einer industriellen Anlage zur Verfügung.

## Patentansprüche

1. Verfahren zur Regeneration eines für die Stickoxidminderung ausgebildeten Katalysators
**dadurch gekennzeichnet, dass** der Katalysator mit einer neutralen oder sauren Fluorid- und/oder neutralen Sulfatlösung behandelt wird.

2. Verfahren nach Anspruch 1,
**dadurch gekennzeichnet, dass** die Fluoridlösung eine Ammoniumfluoridlösung ist.

3. Verfahren nach Anspruch 1,
**dadurch gekennzeichnet, dass** die Sulfatlösung eine Ammoniumsulfatlösung ist.

4. Verfahren nach einem der vorhergehenden Ansprüche,
**dadurch gekennzeichnet, dass** ein Alkalisalz, insbesondere Natriumfluorid bzw. Natriumsulfat, für die Fluorid- bzw. Sulfatlösung verwendet wird.

5. Verfahren nach einem der vorhergehenden Ansprüche,
**dadurch gekennzeichnet, dass** eine wässrige Lösung mit einem Fluorid- bzw. Sulfatanteil bis zu 50 Gew.-% verwendet wird.

6. Verfahren nach Anspruch 5,
**dadurch gekennzeichnet, dass** das die Lösung einen Fluorid- bzw. Sulfatanteil im Bereich zwischen 1 Gew.-% und 15 Gew.-% und insbesondere von etwa 10 Gew.-% aufweist.

7. Verfahren nach einem der vorhergehenden Ansprüche,
**dadurch gekennzeichnet, dass** der Katalysator nach der Behandlung mit der Fluorid- oder Sulfatlösung mit einer vanadiumhaltigen Lösung behandelt wird.

8. Verfahren nach einem der vorhergehenden Ansprüche,
**dadurch gekennzeichnet, dass** der Katalysator in einem ersten Schritt mit der Fluorid- bzw. Sulfatlösung behandelt, in einem zweiten Schritt mit Wasser gespült, in einem dritten Schritt mit einer vanadiumhaltigen Lösung behandelt und in einem vierten Schritt getrocknet wird.
